# EUROPEAN PATENT SPECIFICATION

(11) **EP 3 648 401 B1**
(45) Date of publication and mention of the grant of the patent: **01.05.2024**
(21) Application number: 18824936.1
(22) Date of filing: 26.06.2018
(51) Int. Cl.: H04L 41/0806, H04L 41/5041, H04L 41/5051, H04L 41/0895, H04L 41/342, H04L 41/40, H04L 67/51, H04L 41/0897

(54) **METHOD, DEVICE, AND COMPUTER READABLE STORAGE MEDIUM FOR MANAGING NETWORK SLICE**
VERFAHREN, VORRICHTUNG UND COMPUTERLESBARES SPEICHERMEDIUM ZUR VERWALTUNG VON NETZWERK-SLICES
PROCÉDÉ, DISPOSITIF, SYSTÈME ET SUPPORT DE STOCKAGE LISIBLE PAR ORDINATEUR DE GESTION DE TRANCHE DE RÉSEAU

(30) Priority: 26.06.2017 CN 201710494883
(43) Date of publication of application: 06.05.2020
(73) Proprietor: ZTE Corporation, Shenzhen, Guangdong 518057 (CN)
(72) Inventor: ZHOU, Junchao, Shenzhen Guangdong 518057 (CN); TU, Xiaoyong, Shenzhen Guangdong 518057 (CN)
(74) Representative: Ipsilon
(86) International application number: PCT/CN2018/092856
(87) International publication number: WO 2019/001421

(56) References cited:
- WO-A1-2016/152587
- WO-A1-2017/032280
- WO-A1-2018/076547
- WO-A1-2018/094667
- US-A1- 2017 141 973
- ANONYMOUS: "3rd Generation Partnership Project; Technical Specification Group Services and System Aspects; Telecommunication management; Study on management and orchestration of network slicing for next generation network (Release 15)", 3GPP STANDARD ; TECHNICAL REPORT ; 3GPP TR 28.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V1.2.0, 31 May 2017 (2017-05-31), pages 1-79, XP051298434,
- MOTOROLA MOBILITY ET AL: "Network Slices in NFV Deployments", 3GPP DRAFT; S2-163401_SLICING_AND_NFV_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Vienna, Austria; 20160711 - 20160715 5 July 2016 (2016-07-05), XP051121117, Retrieved from the Internet: URL:http://www.3gpp.org/ftp/tsg_sa/WG2_Arc h/TSGS2_116_Vienna/Docs/ [retrieved on 2016-07-05]
- DEVLIC ALISA ET AL: "NESMO: Network slicing management and orchestration framework", 2017 IEEE INTERNATIONAL CONFERENCE ON COMMUNICATIONS WORKSHOPS (ICC WORKSHOPS), IEEE, 21 May 2017 (2017-05-21), pages 1202-1208, XP033111657, DOI: 10.1109/ICCW.2017.7962822 [retrieved on 2017-06-29]

## Description

### TECHNICAL FIELD

The present disclosure relates to the field of communication technology and particularly to a network slice management method, device and a computer-readable storage medium.

### BACKGROUND

Network slicing is a key feature of Network Function Virtualization (NFV) applied to the fifth generation mobile communication technology (5th generation, 5G). A network slice will form an end-to-end logical network and flexibly provide one or more network services as required by a demanding party of the network slice.

To fulfill orchestration and management of 5G network slices, the 3rd Generation Partnership Project (3GPP) standardization organization has newly added three logical management network elements into the standards, that is, a Communication Service Management Function (CSMF) unit, a Network Slice Management Function (NSMF) unit, and a Network Slice Subnet Management Function (NSSMF) unit. However, the standards have not defined how to orchestrate and deploy the 5G network slices, or how to implement discovery and selection of the 5G network slices in cooperation with the 5G network slices that have been instantiated.

A US patent application, whose publication number is US2017/0141973A1, discloses a method of generating a network slice. The method comprises a network slice orchestrator (NWSO) receiving from a network slice manager (NWSM) a request for a new network slice, the NWSO adding a new service to the new network slice, the NWSO determining a network slice descriptor (NWSD) for the new network slice, the NWSO transmitting to a resource orchestrator (RO) a request for an instantiation of the network slice using enhanced network function virtualization management and orchestration (E-MANO). A method of modifying a network slice is also provided. The method comprises a NWSO receiving from a NWSM a request to add a new service to a network slice, the NWSO adding a new service to the network slice, the NWSO determining a NWSD for the network slice with the added service, and the NWSO transmitting to a RO a request for an instantiation of the added service on the network slice using E-MANO. A method of terminating a network slice is also provided. The method comprises a NWSO receiving from a NWSM a request to terminate a network slice, the NWSO determining the subnetworks to terminate, and the NWSO transmitting to a RO a request for a termination of the slice specific network functions (NFs).

A document "3rd Generation Partnership Project; Technical Specification Group Services and System Aspects; Telecommunication management; Study on management and orchestration of network slicing for next generation network (Release 15)", discloses networking is a key feature for the next generation network, it is about transmitting the network/system from a static "one size fits all" paradigm, to a new paradigm where logical network/partitions are created, with appropriate isolation, resources and optimized topology to serve a particular purpose or service category (e.g. use case/traffic category, or for internal reasons) or even individual customers (logical system created "on demand"), it can be enriched by use of NFV and SDN, the network slicing concept consists of 3 layers: 1) Service Instance Layer, 2) Network Slice Instance Layer, and 3) Resource layer where each layer requires management function, see reference 3GPP TR 23 799. This document specifies use cases for management of network slicing, potential requirements, potential solutions and recommendations.

### SUMMARY

The invention is set out in the appended set of claims.

### BRIEF DESCRIPTION OF DRAWINGS

Fig. 1 is a flowchart of a network slice management method according to an embodiment of the present disclosure.
Fig. 2 is a schematic diagram of components of a network slice management device according to an embodiment of the present disclosure.
Fig. 3 is a signal flow diagram of managing a network slice according to an embodiment of the present disclosure.
Fig. 4 is a signal flow diagram of discovering and sensing a network slice according to an embodiment of the present disclosure.

### DETAILED DESCRIPTION

Aiming that how to orchestrate and deploy and how to discover and select network slices in a 5G network are not specifically defined in the 5G standard protocol, the present disclosure provides a network slice management method, device and a computer-readable storage medium for 5G network slices.

Hereinafter, specific embodiments of the present disclosure will be described in detail with reference to the accompanying drawings.

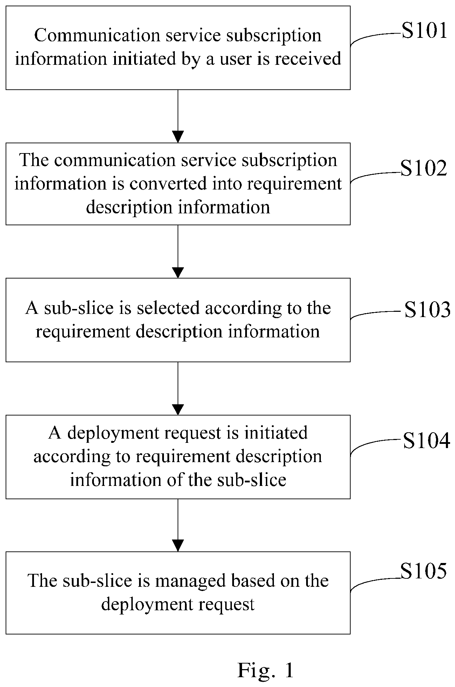

Referring to Fig. 1, which is a flowchart of a network slice management method according to an embodiment of the present disclosure, the method includes the following steps S101 to S105.

In step S101, communication service subscription information initiated by a user is received.

Specifically, the user initiates a subscription to a communication service, i.e. initiates communication service subscription information, when needed. According to different operation modes of the user, the communication service subscription information may be initiated online, by short messages or in a business hall or the like. In an embodiment of the present disclosure, a user may initiate communication service subscription information online through a client provided by a CSMF.

In step S102, the communication service subscription information is converted into requirement description information of a corresponding network slice.

Specifically, the requirement description information may include Service Level Agreement (SLA) information. Various information related to the network service is defined in the SLA information, and typical SLA information may include: a minimum bandwidth allocated to the user; user bandwidth limits; data of the simultaneously served users; notifications prior to network changes that may affect user behavior; access availability; applying statistics; minimum network utilization performance supported by a service provider, such as 99.9% effective working time or downtime up to one minute per day; and traffic priorities of various types of users, etc.

In step S103, a sub-slice is selected and requirement description information of the sub-slice is determined, according to the requirement description information.

The information contained in the SLA information (requirement description information) as described above may reflect the specific contents of the communication service subscription information initiated by the user, and thus, parameter requirements of a sub-slice may be determined according to the SLA information. Determining the parameter requirements of the sub-slice according to the SLA information may include: determining at least one of sharing information, acceleration information, priority information, and the like of the sub-slice according to the SLA information. The sharing information of a sub-slice refers to whether the sub-slice is dedicated or shared; the acceleration information of a sub-slice refers to network speed information and the like of the sub-slice determined from a user bandwidth and the like; and the priority information refers to a use priority of each user for the traffic provided by the sub-slice. In addition to the sharing information, the acceleration information, and the priority information, the parameter requirements of the sub-slice may also include other parts. There is no clear and definite boundary between a network slice and a sub-slice, and any segmentation meeting the requirements may be carried out on a network slice. The segmentation of the network slice is mainly carried out through an NSMF, and the logic of the segmentation is determined according to the SLA. The sub-slice management after slicing is performed by an NSSMF.

In step S104, a deployment indicator of a corresponding network service is determined according to the requirement description information of the sub-slice, and a deployment request for the sub-slice is initiated based on the deployment indicator of the network service.

The deployment indicator may include at least one of a capacity, a traffic model, disaster tolerance characteristics, sharing, acceleration, and a priority; and these indicator descriptions may reflect the requirement description information of the sub-slice as described above. In other words, the requirement description information of the sub-slice may be reflected by these deployment indicators in the sub-slice.

In an embodiment, the step of determining the deployment indicator of the corresponding network service according to the requirement description information of the sub-slice, and initiating the deployment request for the sub-slice based on the deployment indicator of the network service may include: selecting a preset network service or generating a new network service based on the preset network service, according to the SLA information of the sub-slice; determining a deployment indicator of the selected or generated network service; initiating a reservation request for a resource for the sub-slice based on the deployment indicator; feeding back response message indicating successful reservation of the resource; and initiating a deployment request for the sub-slice.

The reservation request for the resource for the sub-slice is typically initiated by an NSSMF to a Network Function Virtualization Orchestrator (NFVO) configured to manage and coordinate a Network Service (NS) Life Cycle; coordinate management of a Virtualised Network Function (VNF) Life Cycle, which needs to be supported by a Virtual Network Function Manager (VNFM); and coordinate management of various types of resources of NFV Infrastructure (NFVI), which needs to be supported by a Virtual Infrastructure Manager (VIM). The above configuration of the NFVO may ensure optimal configurations of various types of resources and connections as desired.

When the reservation request for the resource is initiated, the NFVO interacts with the VNFM to complete computation of the resource required by the sub-slice, which may include a computing resource, a storage resource, a network resource, a resource required by deployed characteristics, and the like. After completing the computation of the resource, the NFVO initiates the reservation request for the resource to the NFVI or VIM based on a computation result.

After the reservation request for the resource is initiated, an object receiving the request, e.g., the NFVI or VIM, may reply a reservation response to the initiator (i.e., the NFVO) according to a state of managed resources. The reservation response may include a success or failure response, where the success response indicates that the resources managed by the NFVI or VIM are in a spare state, and may be used for deploying the sub-slice; while the failure response indicates that the resources are insufficient and cannot be used for deploying the sub-slice. When the failure response occurs, the deployment of the sub-slice may be delayed as appropriate, and the NFVI or VIM continues to detect the state of the managed resources until a response indicating successful resource reservation can be given.

Upon receiving the response indicating successful resource reservation, the NSSMF knows that the subsequent deployment of the sub-slice can be performed, and therefore, the NSSMF continues to initiate the deployment request for the sub-slice, which is also sent to the NFVO.

In step S105, the sub-slice is managed based on the deployment request.

The sub-slice management may include deployment of the sub-slice which mainly includes data configuration. If there is a demand for network deployment within the deployed sub-slice, the NFVO completes the deployment of network resources through a Software Defined Network Orchestrator (SDNO) or router plug-in.

While deploying the sub-slice, the NFVO interacts with the VNFM, and employs a European Telecommunications Standards Institute (ETSI) standard procedure to complete the deployment of the sub-slice. The deployment includes two modes: direct deployment and indirect deployment.

While deploying the sub-slice, the NFVO replies to the NSSMF with a response message indicating successful activation of a network slice, where the response message may carry, but is not limited to, the following information: a network element or service component identifier; network element or service component deployment characteristics, including sharing information, priority information, acceleration information, and the like; network element or service component capability properties, including whether support MTC or URLLC access, and the like; network element or service component reliability, such as whether support load sharing, pool disaster tolerance, whether support migration, and the like; and monitoring index characteristics, including whether support monitoring, a list of supported monitoring indices, and the like.

Specifically, the sub-slice deployment (management) may include: pushing configuration data through a sub-slice management facility or acquiring the configuration data from the sub-slice management facility through a deployed sub-slice, and performing data configuration within the sub-slice. An Element Management (EM) is notified by the NSSMF to initiate the data configuration process for the sub-slice, and the EM further interacts with Virtual Network Functions (VNFs) to complete the data configuration for the VNFs or service components within the sub-slice. In a specific data configuration process, the EM may deliver the configuration data to the VNFs or service components in corresponding sub-slice, which may be referred to as a PUSH mode; the corresponding configuration data may also be actively acquired from the EM by the VNFs or service components within the sub-slice, which may be referred to as a PULL mode.

In an embodiment of the present disclosure, the step of managing the sub-slice may further include: sending a response message indicating successful deployment of the sub-slice. The response message may carry instantiation information of the sub-slice and information of network elements/service components composing the sub-slice. The instantiation information of the sub-slice includes but is not limited to: a sub-slice instance identifier; sub-slice deployment characteristics (sharing, priority, acceleration, etc.); sub-slice capability properties (supporting enhanced Mobile Broadband (eMBB), Machine Type Communication (MTC), etc.); sub-slice performance characteristics (maximum supported message capability, capacity, etc.); sub-slice reliability (supporting load sharing, Pool disaster tolerance, supporting migration, etc.); monitoring index characteristics (whether support monitoring, a list of supported monitoring indices) and the like. Information of the network elements/service components composing the sub-slice includes but is not limited to: a network element or service component identifier; network element or service component deployment characteristics (sharing, priority, acceleration, etc.); network element or service component capability properties (supporting MTC access, supporting Ultra Reliable &Low Latency Communication (URLLC) access, etc.); network element or service component reliability (supporting load sharing, Pool disaster tolerance, supporting migration, etc.); monitoring index characteristics (whether support monitoring, a list of supported monitoring indices) and the like.

Accordingly, the NSMF may generate instantiation information of a slice according to the information carried in the response message, such as the instantiation information of the sub-slice, the information of the network elements/service components composing the sub-slice, and the like. The instantiation information of the slice includes but is not limited to: a slice instance identifier; slice deployment characteristics (sharing, priority, acceleration, etc.); slice capability properties (supporting eMBB, MTC, etc.); slice performance characteristics (maximum supported message capability, capacity, etc.); slice reliability (supporting load sharing, Pool disaster tolerance, supporting migration, etc.); monitoring index characteristics (whether support monitoring, a list of supported monitoring indices) and the like.

Then, the NSMF may cache the instantiation information of the sub-slice, the information of the network elements/service components composing the sub-slice, and the instantiation information of the slice, and send a notification message indicating successful deployment of the slice to the CSMF.

Accordingly, after receiving the notification message indicating successful deployment of the slice, the CSMF sends a notification message indicating successful subscription to the communication service by the user to the user to indicate that the operation of the user is completed.

In an embodiment of the present disclosure, the network slice management method may further include the following steps: receiving a subscription request for operation information of the slice from other network element facilities; and sending a change notification of the operation information of the slice to the other network element facilities when the operation information of the network slice changes. The change notification may include a change type and the latest operation information of the slice.

In an embodiment, a logic function entity, i.e., a Network Slice Select Function (NSSF) unit, is added to the network slice, and configured to store the latest operation information of the slice in real time and select a slice when a terminal accesses the 5G network slices.

Subscribing to the change notification of the operation information of the slice may include: sending, by the NSSF, a subscription request for the change notification of the operation information of the slice to the NS(S)MF, where the request carries information such as an NSSF identifier. The NS(S)MF represents the NSMF or NSSMF.

Then, the NS(S)MF replies to the NSSF with a subscription response indicating that the NS(S)MF knows that the NSSF has subscribed to the change notification of the operation information of the slice. When the operation information of the slice changes, the NS(S)MF sends the change notification of the operation information of the slice carrying a specific change type and the latest operation information of the slice to the NSSF.

The change type, i.e., a condition that triggers the change, includes but is not limited to: at least one of addition, modification and deletion of a network slice. The addition of a network slice indicates that information of a new network slice or sub-slice is cached successfully; the modification of a network slice indicates that stored information changes, which may involve a change in parameter information of the corresponding slice, such as a change in priority, a change in sharing information, and the like; and the deletion of a network slice indicates that cached information is deleted, which may indicate that a corresponding slice is deleted, or that relevant contents in a slice/sub-slice are deleted, etc.

After giving the notification, the NSSF caches the latest operation information of the slice, and makes a response to the NS(S)MF to indicate that the NSSF has received the change notification of the operation information of the slice. Thus, through the process of slice discovery and sensing, the NSSF can always maintain the latest operation information of the slice so that when a user accesses the 5G slices, a suitable network slice may be selected for the user. The specific slice selection process is not described in detail herein.

According to the network slice management method provided by the embodiment of the disclosure, the complete flow from a user subscribing to the communication service to completion of the slice orchestration and deployment can be effectively completed, which is a supplement and improvement to the standard protocol.

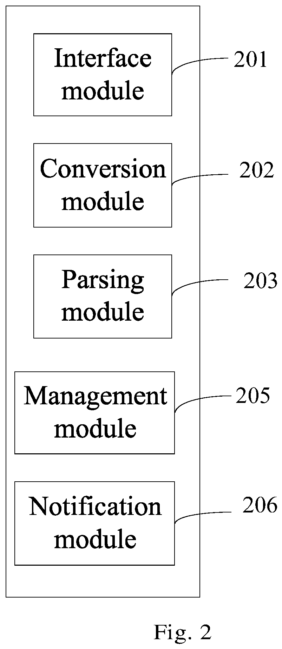

Referring to Fig. 2, which is a schematic diagram of components of a network slice management device according to an embodiment of the present disclosure, the network slice management device includes a interface module 201, a conversion module 202, a parsing module 203 and a management module 205.

The interface module 201 is configured to receive communication service subscription information initiated by a user.

The conversion module 202 is configured to convert the communication service subscription information into requirement description information of a corresponding network slice.

The parsing module 203 is configured to select a sub-slice and determine requirement description information of the sub-slice, according to the requirement description information.

The management module 205 is configured to: determine a deployment indicator of a corresponding network service according to the requirement description information of the sub-slice, and initiate a deployment request for the sub-slice based on the deployment indicator of the network service; and manage the sub-slice based on the deployment request.

The management module 205 may be further configured to: select a preset network service or generate a new network service based on the preset network service, according to SLA information of the sub-slice; determine a deployment indicator of the selected or generated network service; initiate a reservation request for a resource for the sub-slice based on the deployment indicator; feed back response message indicating successful reservation of the resource; and initiate the deployment request for the sub-slice.

Specifically, the management module 205 may be further configured to: push configuration data through a sub-slice management facility or acquire the configuration data from the sub-slice management facility through a deployed sub-slice, and perform data configuration within the sub-slice. The interface module 201 may be further configured to: send a response message indicating successful deployment of the sub-slice, where the response message may carry: instantiation information of the sub-slice and information of network elements/service components composing the sub-slice. In an embodiment of the present disclosure, the network slice management device may further include a notification module 206 configured to receive subscription request for operation information of the slice from other network element facilities; and send a change notification of the operation information of the slice to the other network element facilities when the operation information of the network slice changes. The change notification may include a change type and the latest operation information of the slice.

It is to be noted that the various modules may perform the steps and operations described above in conjunction with steps S101 to S105 and achieve the same technical effect. For the sake of brevity, the steps and operations described herein are not repeated.

According to the network slice management device provided by the embodiment of the present disclosure, the complete flow from a user subscribing to the communication service to completion of the slice orchestration and deployment can be effectively completed, which is a supplement and improvement to the standard protocol.

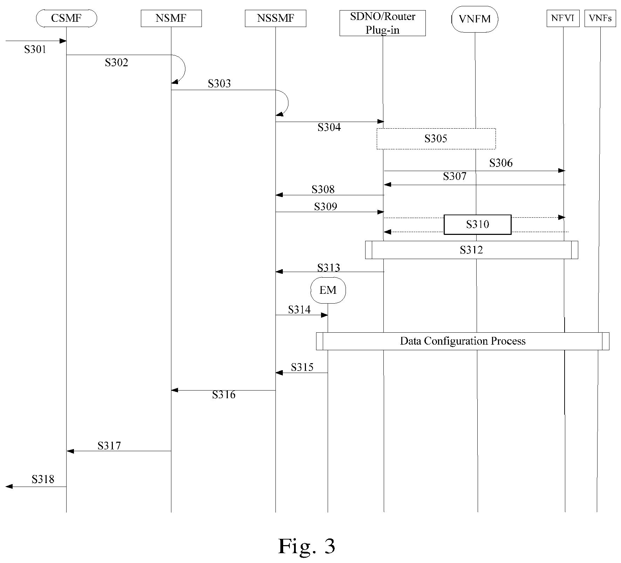

Referring to Fig. 3, which is a signal flow diagram of a network slice management method according to an embodiment of the present disclosure, the network slice management method includes the following steps S301-S318.

In step S301, a user initiates communication service subscription information through a client provided by a CSMF.

In step S302, the communication service subscription information is converted into requirement description information including SLA information.

In step S303, an NSMF divides a network slice into different sub-slices, determines SLA information of each of the sub-slices, and then passes the SLA information to an NSSMF, where the SLA information includes: capacity, performance, traffic model, disaster tolerance characteristics, sharing, acceleration, priority, and other parameters.

In step S304, the NSSMF converts the SLA information into specific indicators such as the capacity, QoS characteristics, and performance of a sub-slice network service, and selects a preset network service or generates a new network service based on the preset network service, based on the indicators, and then initiates a reservation request for a resource for the sub-slice to an NFVO based on the selected or generated network service. As described above in conjunction with step S305, the NFVO completes deployment of network resources through a Software Defined Network Orchestrator (SDNO) or router plug-in. Therefore, although the NFVO is not shown in Fig. 3, it should be understood that the NFVO is at substantially the same location as the SDNO or router plug-in.

In step S305, the NFVO interacts with a VNFM to complete computation of a resource required by the sub-slice (including a computing resource, a storage resource, a network resource, and a resource required for deployment characteristics).

In step S306, the NFVO initiates a reservation request for the resource to an NFVI or VIM.

In step S307, the NFVI/VIM replies to the NFVO with a reservation response according to the state of managed resources.

In step S308, the NFVO replies to NSSMF with a response to the resource reservation.

In step S309, the NSSMF initiates a sub-slice deployment request to the NFVO according to a response indicating successful resource reservation to deploy the specific sub-slice.

In step S310, if there is a demand for network deployment within the sub-slice to be deployed, the NFVO completes the deployment of network resources through a Software Defined Network Orchestrator (SDNO) or router plug-in.

In step S312, the NFVO interacts with a VNFM and completes deployment of the sub-slice through a direct or indirect deployment mode using an ETSI standard procedure.

In step S313, the NFVO replies to the NSSMF with a response indicating successful activation of a slice. The information carried in the response message includes but is not limited to: a network element or service component identifier, network element or service component deployment characteristics (sharing, priority, acceleration, etc.), network element or service component capability properties (supporting MTC or URLLC access, and the like), network element or service component reliability (supporting load sharing, Pool disaster tolerance, supporting migration, etc.), monitoring index characteristics (whether support monitoring, a list of supported monitoring indices) and the like.

In step S314, an EM is notified by the NSSMF to initiate the data configuration process for the sub-slice, and the EM further interacts with VNFs to complete the data configuration for the VNFs or service components within the sub-slice.

During the configuration process, the EM may deliver the configuration data to the VNFs or service components in a corresponding sub-slice, which may be referred to as a PUSH mode; the corresponding configuration data may also be actively acquired from the EM by the VNFs or service components within the sub-slice, which may be referred to as a PULL mode.

In step S315, after completing the data configuration, the EM replies to the NSSMF with a response indicating completion of data configuration.

In step S316, the NSSMF replies to the NSMF with a response indicating successful deployment of the sub-slice, where the response message may carry instantiation information of the sub-slice and information of network elements/service components composing the sub-slice.

The instantiation information of the sub-slice includes but is not limited to: a sub-slice instance identifier, sub-slice deployment characteristics (sharing, priority, acceleration, etc.), sub-slice capability properties (supporting eMBB, MTC, etc.), sub-slice performance characteristics (maximum supported message capability, capacity, etc.), sub-slice reliability (supporting load sharing, Pool disaster tolerance, supporting migration, etc.), monitoring index characteristics (whether support monitoring, a list of supported monitoring indices) and the like.

The information of the network elements or service components composing the sub-slice includes but is not limited to: a network element or service component identifier, network element or service component deployment characteristics (sharing, priority, acceleration, etc.), network element or service component capability properties (supporting MTC or URLLC access, and the like), network element or service component reliability (supporting load sharing, Pool disaster tolerance, supporting migration, etc.), monitoring index characteristics (whether support monitoring, a list of supported monitoring indices) and the like.

In step S317, the NSMF generates instantiation information of a slice according to the instantiation information of the sub-slice, the information of the network elements/service components composing the sub-slice in the response message.

After locally caching the instantiation information of the sub-slice, the information of the network elements/service components composing the sub-slice, and the instantiation information of the slice, the NSMF sends a notification message indicating successful deployment of the slice to the CSMF, and triggers a process of discovering and sensing the slice.

In step S318, the CSMF sends a notification message indicating successful subscription to the communication service by the user to the user.

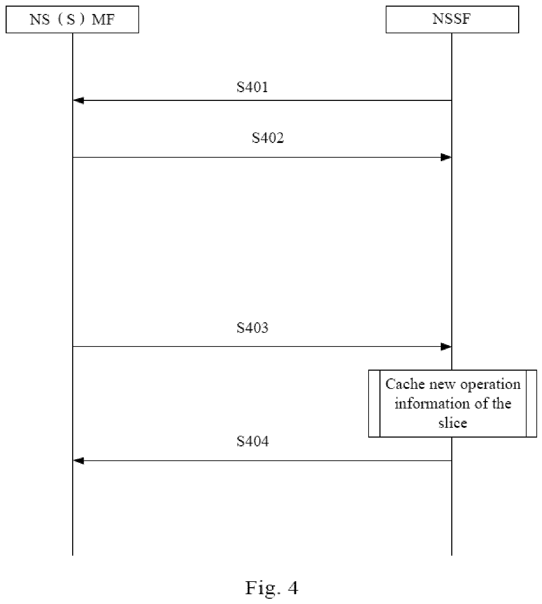

The discovering and sensing process of the network slice is described below with reference to Fig. 4, which includes the following steps S401 to S404.

In step S401, the NSSF sends a subscription request for a change notification of operation information of the slice to the NS(S)MF, where the request carries information such as an NSSF identifier.

In step S402, the NS(S)MF replies to the NSSF with a subscription response.

In step S403, when information of the slice changes, the NS(S)MF sends a change notification carrying a specific operation type (addition/modification/deletion) and the latest operation information of the slice to the NSSF.

Conditions for triggering the change notification include but are not limited to: 1) successful cache of information such as a new network slice, e.g., a new slice is orchestrated and deployed successfully; 2) changes in cached information, e.g., the NS(S)MF senses that performances or functional characteristics or the like of the running slice is changed; 3) deletion of the cached information, e.g., the running slice is deactivated or deleted, or resources are passively released, or the like.

In step S404, the NSSF locally caches the latest operation information of the slice, and replies to the NS(S)MF with a response to the change notification.

According to the network slice management method provided by the embodiment of the disclosure, the network slices can be orchestrated and deployed from a user initiating communication service subscription information, which is a supplement and improvement to the standard protocol.

In an embodiment of the present disclosure, there is further provided a computer-readable storage medium having one or more computer programs stored thereon which, when executed by one or more processors, cause the following steps to be performed: receiving communication service subscription information initiated by a user; converting the communication service subscription information into requirement description information of a corresponding network slice; selecting a sub-slice and determining requirement description information of the sub-slice, according to the requirement description information; determining a deployment indicator of a corresponding network service according to the requirement description information of the sub-slice, and initiating a deployment request for the sub-slice based on the deployment indicator of the network service; and managing the sub-slice based on the deployment request.

It is to be noted that in the computer-readable medium according to the embodiments of the present disclosure, the computer programs therein, when executed by one or more processors, may cause the steps and operations described above in conjunction with steps S101 to S105 to be performed and achieve the same technical effect. For the sake of brevity, the steps and operations described herein are not repeated.

Those skilled in the art will appreciate that the above-described modules or steps of the present disclosure may be implemented by a general purpose computing device, and that when implemented, the modules or steps may be concentrated on a single computing device or distributed across a network of computing devices. The various modules or steps may also be implemented by a program code executable by a computing device, and when implemented, the program code stored in a storage medium (a ROM/RAM, a disk, an optical disk) may be executed by a computing device to implement functions of the various modules or perform the various steps. In some cases, the steps shown or described may be performed in an order different than that described herein. The present disclosure is not limited to any specific combination of hardware and software.

The above specific embodiments are merely illustrative explanation of the present disclosure, and the scope of the present disclosure is not to be construed as being limited to these embodiments. It will be apparent to those ordinary skilled in the art to which the present disclosure pertains that several changes or substitutions can be made without departing from the scope of the disclosure, as defined by the appended claims.

## Claims

1. A network slice management method, which is **characterized by**:
receiving (S101), by a Communication Service Management Function, CSMF, unit, communication service subscription information initiated by a user through a client;
converting (S102), by a Network Slice Management Function, NSMF, unit, the communication service subscription information into requirement description information of a network slice;
dividing, by the NSMF unit, the network slice into different sub-slices;
selecting (S103) a sub-slice from the different sub-slices and determining requirement description information of the sub-slice, according to the requirement description information of the network slice;
determining, by a Network Slice Subnet Management Function, NSSMF, unit, a deployment indicator of a corresponding network service according to the requirement description information of the sub-slice, deploying the sub-slice based on the deployment indicator of the network service, and managing (S105) the sub-slice by interacting with other network element facilities;
adding a Network Slice Select Function, NSSF, unit in the network slice, wherein the NSSF unit is configured to obtain a condition that triggers change of operation information of the network slice and the latest operation information of the network slice.

2. The network slice management method according to claim 1, wherein the deployment indicator of the network service comprises at least one of a capacity, a traffic model, disaster tolerance characteristics, sharing, acceleration, and a priority.

3. The network slice management method according to claim 1, wherein requirement description information comprises Service Level Agreement, SLA, information; and
wherein the NSSMF unit determining the deployment indicator of the corresponding network service according to the requirement description information of the sub-slice, and deploying the sub-slice based on the deployment indicator of the network service comprises:
selecting, by the NSSMF unit, a preset network service or generating a new network service based on the preset network service, according to SLA information of the sub-slice;
determining, by the NSSMF unit, a deployment indicator of the selected or generated network service;
initiating, by the NSSMF unit, a reservation request for a resource for the sub-slice to a Network Function Virtualization Orchestrator, NFVO, based on the deployment indicator of the selected or generated network service;
receiving, by the NSSMF unit, a response message fed back by the NFVO for indicating that the resource for the sub-slice is reserved successfully; and
initiating, by the NSSMF unit, a deployment request for the sub-slice to the NFVO.

4. The network slice management method according to claim 1, wherein the NSSMF unit managing the sub-slice by interacting with the other network element facilities comprises:
sending, by the NSSMF unit, a response message indicating successful deployment of the sub-slice to the NSMF unit, wherein the response message indicating successful deployment of the sub-slice carries instantiation information of the sub-slice and information of network elements/service components composing the sub-slice.

5. The network slice management method according to any one of claims 1 to 4, wherein the NSSMF unit managing the sub-slice by interacting with the other network element facilities comprises:
an Element Management, EM, pushing configuration data to Virtual Network Functions, VNFs, or service components in the sub-slice; or
VNFs or service components in the sub-slice acquiring configuration data from an EM.

6. The network slice management method according to claim 1, which is further **characterized by**:
receiving, by the NSMF unit or the NSSMF unit, a subscription request for a change notification of the operation information of the network slice from the NSSF unit; and
sending, by the NSMF unit or the NSSMF unit, a change notification of the operation information of the network slice to the NSSF unit when the operation information of the network slice changes.

7. The network slice management method according to claim 6, wherein the change notification comprises a change type, and the change type comprises at least one of addition, modification and deletion of the network slice.

8. A network slice management system, which is **characterized by**:
a Communication Service Management Function, CSMF, unit, configured to receive communication service subscription information initiated by a user through a client;
a Network Slice Management Function, NSMF, unit, configured to convert the communication service subscription information into requirement description information of a network slice, divide the network slice into different sub-slices, select a sub-slice from the different sub-slices, and determine requirement description information of the sub-slice, according to the requirement description information of the network slice; and
a Network Slice Subnet Management Function, NSSMF, unit, configured to determine a deployment indicator of a corresponding network service according to the requirement description information of the sub-slice, deploy the sub-slice based on the deployment indicator of the network service, and manage the sub-slice by interacting with other network element facilities;
a Network Slice Select Function, NSSF, unit added in the network slice, wherein the NSSF unit is configured to obtain a condition that triggers change of operation information of the network slice and the latest operation information of the network slice.

9. The network slice management system according to claim 8, wherein requirement description information comprises Service Level Agreement, SLA, information; and
wherein the NSSMF unit is further configured to:
select a preset network service or generate a new network service based on the preset network service, according to the SLA information of the sub-slice;
determine a deployment indicator of the selected or generated network service;
initiate a reservation request for a resource for the sub-slice to a Network Function Virtualization Orchestrator, NFVO, based on the deployment indicator of the selected or generated network service;
receive response message fed back by the NFVO for indicating that the resource for the sub-slice is reserved successfully; and
initiate a deployment request for the sub-slice to the NFVO.

10. The network slice management system according to claim 8, wherein the NSSMF unit is further configured to:
send a response message indicating successful deployment of the sub-slice to the NSMF unit, wherein the response message indicating successful deployment of the sub-slice carries instantiation information of the sub-slice and information of network elements/service components composing the sub-slice.

11. The network slice management system according to any one of claims 8 to 10, which is further **characterized by**:
an Element Management, EM, configured to push configuration data to Virtual Network Functions, VNFs, or service components in the sub-slice; or
VNFs or service components in the sub-slice configured to acquire configuration data from an EM.

12. The network slice management system according to claim 8, wherein the NSMF unit or the NSSMF unit is configured to:
receive a subscription request for a change notification of the operation information of the network slice from the NSSF unit; and
send a change notification of the operation information of the network slice to the NSSF unit when the operation information of the network slice changes.

13. A computer-readable storage medium having one or more computer programs stored thereon which, when executed by one or more processors, cause the following steps to be performed:
a Communication Service Management Function, CSMF, unit receiving communication service subscription information initiated by a user through a client;
a Network Slice Management Function, NSMF, unit converting the communication service subscription information into requirement description information of a network slice; dividing the network slice into different sub-slices; selecting a sub-slice from the different sub-slices; and determining requirement description information of the sub-slice, according to the requirement description information of the network slice;
a Network Slice Subnet Management Function, NSSMF, unit determining a deployment indicator of a corresponding network service according to the requirement description information of the sub-slice, deploying the sub-slice based on the deployment indicator of the network service, and managing the sub-slice by interacting with other network element facilities; and
adding a Network Slice Select Function, NSSF, unit in the network slice, wherein the NSSF unit is configured to obtain a condition that triggers change of operation information of the network slice and the latest operation information of the network slice.

## Patentansprüche

1. Netzwerkscheiben-Verwaltungsverfahren, das **gekennzeichnet ist, durch**:
Empfangen (S101), **durch** eine Einheit einer Kommunikationsdienst-Verwaltungsfunktion, CSMF, von Kommunikationsdienst-Subskriptionsinformationen, die von einem Benutzer über einen Client initiiert werden;
Umwandeln (S102), **durch** eine Einheit einer Netzwerkscheiben-Verwaltungsfunktion, NSMF, der Kommunikationsdienst-Subskriptionsinformationen in Anforderungsbeschreibungsinformationen einer Netzwerkscheibe;
Unterteilen, **durch** die NSMF-Einheit, der Netzwerkscheibe in verschiedene Teilscheiben;
Auswählen (S103) einer Teilscheibe aus den verschiedenen Teilscheiben und Bestimmen von Anforderungsbeschreibungsinformationen der Teilscheibe gemäß den Anforderungsbeschreibungsinformationen der Netzwerkscheibe;
Bestimmen, **durch** eine Einheit einer Netzwerkscheiben-Teilnetz-Verwaltungsfunktion, NSSMF, eines Verteilungsindikators eines entsprechenden Netzwerkdienstes gemäß den Anforderungsbeschreibungsinformationen der Teilscheibe, Verteilen der Teilscheibe basierend auf dem Verteilungsindikator des Netzwerkdiensts, und Verwalten (S105) der Teilscheibe **durch** Interagieren mit anderen Netzwerkelementeinrichtungen;
Hinzufügen einer Einheit einer Netzwerkscheiben-Auswahlfunktion, NSSF, in der Netzwerkscheibe, wobei die NSSF-Einheit konfiguriert ist, um eine Bedingung, die eine Änderung der Betriebsinformationen der Netzwerkscheibe auslöst, und die letzten Betriebsinformationen der Netzwerkscheibe zu erlangen.

2. Netzwerkscheiben-Verwaltungsverfahren nach Anspruch 1, wobei der Verteilungsindikator des Netzwerkdienstes mindestens eines von einer Kapazität, einem Verkehrsmodell, Notfalltoleranzmerkmalen, gemeinsamer Nutzung, Beschleunigung und einer Priorität umfasst.

3. Netzwerkscheiben-Verwaltungsverfahren nach Anspruch 1, wobei die Anforderungsbeschreibungsinformationen Informationen über eine Dienstleistungs-Güte-Vereinbarung, SLA, umfassen; und
wobei das Bestimmen durch die NSSMF-Einheit des Verteilungsindikators des entsprechenden Netzwerkdienstes gemäß den Anforderungsbeschreibungsinformationen der Teilscheibe bestimmt und Verteilen der Teilscheibe basierend auf dem Verteilungsindikator des Netzwerkdienstes Folgendes umfasst:
Auswählen, durch die NSSMF-Einheit, eines voreingestellten Netzwerkdienstes oder Erzeugen eines neuen Netzwerkdienstes basierend auf dem voreingestellten Netzwerkdienst gemäß den SLA-Informationen der Teilscheibe;
Bestimmen, durch die NSSMF-Einheit, eines Verteilungsindikators des ausgewählten oder erzeugten Netzwerkdienstes;
Initiieren, durch die NSSMF-Einheit, einer Reservierungsanfrage für eine Ressource für die Teilscheibe an einen Netzwerkfunktion-Virtualisierungsorchestrator, NFVO, basierend auf dem Verteilungsindikator des ausgewählten oder erzeugten Netzwerkdienstes;
Empfangen, durch die NSSMF-Einheit, einer von der NFVO zurückgesendeten Antwortnachricht, die angibt, dass die Ressource für die Teilscheibe erfolgreich reserviert ist; und
Initiieren, durch die NSSMF-Einheit, einer Verteilungsanforderung für die Teilscheibe an die NFVO.

4. Netzwerkscheiben-Verwaltungsverfahren nach Anspruch 1, wobei das Verwalten der Teilscheibe durch die NSSMF-Einheit durch Interagieren mit den anderen Netzelementeinrichtungen Folgendes umfasst:
Senden, durch die NSSMF-Einheit, einer Antwortnachricht, die eine erfolgreiche Verteilung der Teilscheibe angibt, an die NSMF-Einheit, wobei die Antwortnachricht, die die erfolgreiche Verteilung der Teilscheibe angibt, Instanziierungsinformationen der Teilscheibe und Informationen über Netzelemente/Dienstkomponenten, aus denen die Teilscheibe besteht, enthält.

5. Netzwerkscheiben-Verwaltungsverfahren nach einem der Ansprüche 1 bis 4, wobei das Verwalten der Teilscheibe durch die NSSMF-Einheit durch Interagieren mit den anderen Netzelementeinrichtungen Folgendes umfasst:
eine Elementverwaltung, EM, die Konfigurationsdaten an virtuelle Netzwerkfunktionen, VNF, oder Dienstkomponenten in der Teilscheibe weiterleitet; oder
VNFs oder Dienstkomponenten in der Teilscheibe, die Konfigurationsdaten von einer EM erfassen.

6. Netzwerkscheiben-Verwaltungsverfahren nach Anspruch 1, das ferner **gekennzeichnet ist, durch**:
Empfangen, **durch** die NSMF-Einheit oder die NSSMF-Einheit, einer Subskriptionsanforderung für eine Änderungsbenachrichtigung der Betriebsinformationen der Netzwerkscheibe von der NSSF-Einheit; und
Senden, **durch** die NSMF-Einheit oder die NSSMF-Einheit, einer Änderungsbenachrichtigung der Betriebsinformationen der Netzwerkscheibe an die NSSF-Einheit, wenn sich die Betriebsinformationen der Netzwerkscheibe ändern.

7. Netzwerkscheiben-Verwaltungsverfahren nach Anspruch 6, wobei die Änderungsbenachrichtigung eine Änderungsart umfasst und die Änderungsart mindestens eines von Hinzufügen, Modifizieren und Löschen der Netzwerkscheibe umfasst.

8. Netzwerkscheiben-Verwaltungsverfahren, das **gekennzeichnet ist, durch**:
eine Einheit einer Kommunikationsdienst-Verwaltungsfunktion, CSMF, die konfiguriert ist, um Kommunikationsdienst-Subskriptionsinformationen zu empfangen, die von einem Benutzer über einen Client initiiert werden;
eine Einheit einer Netzwerkscheiben-Verwaltungsfunktion, NSMF, die konfiguriert ist, um die Kommunikationsdienst-Subskriptionsinformationen in Anforderungsbeschreibungsinformationen einer Netzwerkscheibe umzuwandeln, die Netzwerkscheibe in verschiedene Teilscheiben zu unterteilen, eine Unterscheibe aus den verschiedenen Teilscheiben auszuwählen, und Anforderungsbeschreibungsinformationen der Teilscheibe gemäß den Anforderungsbeschreibungsinformationen der Netzwerkscheibe zu bestimmen; und
eine Netzwerkscheiben-Teilnetz-Verwaltungsfunktion, NSSMF, die konfiguriert ist, um einen Verteilungsindikator eines entsprechenden Netzwerkdienstes gemäß den Anforderungsbeschreibungsinformationen der Teilscheibe zu bestimmen, die Teilscheibe basierend auf dem Verteilungsindikator des Netzwerkdienstes zu verteilen und die Teilscheibe **durch** Interagieren mit anderen Netzwerkelementeinrichtungen zu verwalten;
eine Einheit einer Netzwerkscheiben-Auswahlfunktion, NSSF, die in der Netzwerkscheibe hinzugefügt ist, wobei die NSSF-Einheit konfiguriert ist, um eine Bedingung, die eine Änderung der Betriebsinformationen der Netzwerkscheibe auslöst, und die letzten Betriebsinformationen der Netzwerkscheibe zu erlangen.

9. Netzwerkscheiben-Verwaltungssystem nach Anspruch 8, wobei die Anforderungsbeschreibungsinformationen Informationen über eine Dienstleistungs-Güte-Vereinbarung, SLA, umfassen; und
wobei die NSSMF-Einheit ferner zu Folgendem konfiguriert ist:
Auswählen eines voreingestellten Netzwerkdienstes oder Erzeugen eines neuen Netzwerkdienstes basierend auf dem voreingestellten Netzwerkdienst gemäß den SLA-Informationen der Teilscheibe;
Bestimmen eines Verteilungsindikators des ausgewählten oder erzeugten Netzwerkdienstes;
Initiieren einer Reservierungsanfrage für eine Ressource für die Teilscheibe an einen Netzwerkfunktion-Virtualisierungsorchestrator, NFVO, basierend auf dem Verteilungsindikator des ausgewählten oder erzeugten Netzwerkdienstes;
Empfangen einer von der NFVO zurückgesendeten Antwortnachricht, die angibt, dass die Ressource für die Teilscheibe erfolgreich reserviert ist; und
Initiieren einer Verteilungsanforderung für die Teilscheibe an die NFVO.

10. Netzwerkscheiben-Verwaltungssystem nach Anspruch 8, wobei die NSSMF-Einheit ferner zu Folgendem konfiguriert ist:
Senden einer Antwortnachricht, die eine erfolgreiche Verteilung der Teilscheibe angibt, an die NSMF-Einheit, wobei die Antwortnachricht, die die erfolgreiche Verteilung der Teilscheibe angibt, Instanziierungsinformationen der Teilscheibe und Informationen über Netzelemente/Dienstkomponenten, aus denen die Teilscheibe besteht, enthält.

11. Netzwerkscheiben-Verwaltungssystem nach einem der Ansprüche 8 bis 10, das ferner **gekennzeichnet ist, durch**:
eine Elementverwaltung, EM, die konfiguriert ist, um Konfigurationsdaten an virtuelle Netzwerkfunktionen, VNF, oder Dienstkomponenten in der Teilscheibe weiterzuleiten; oder
VNFs oder Dienstkomponenten in der Teilscheibe, die konfiguriert sind, um Konfigurationsdaten von einer EM zu erfassen.

12. Netzwerkscheiben-Verwaltungssystem nach Anspruch 8, wobei die NSMF-Einheit oder die NSSMF-Einheit zu Folgendem konfiguriert ist:
Empfangen einer Subskriptionsanforderung für eine Änderungsbenachrichtigung der Betriebsinformationen der Netzwerkscheibe von der NSSF-Einheit; und
Senden einer Änderungsbenachrichtigung der Betriebsinformationen der Netzwerkscheibe an die NSSF-Einheit, wenn sich die Betriebsinformationen der Netzwerkscheibe ändern.

13. Computerlesbares Speichermedium, auf dem ein oder mehrere Computerprogramme gespeichert sind, die, wenn sie von einem oder mehreren Prozessoren ausgeführt werden, veranlassen, dass die folgenden Schritte durchgeführt werden:
eine Einheit einer Kommunikationsdienst-Verwaltungsfunktion, CSMF, empfängt Kommunikationsdienst-Subskriptionsinformationen, die von einem Benutzer über einen Client initiiert werden;
eine Einheit einer Netzwerkscheiben-Verwaltungsfunktion, NSMF, wandelt die Kommunikationsdienst-Subskriptionsinformationen in Anforderungsbeschreibungsinformationen einer Netzwerkscheibe um, unterteilt die Netzwerkscheibe in verschiedene Teilscheiben, wählt eine Unterscheibe aus den verschiedenen Teilscheiben aus und bestimmt Anforderungsbeschreibungsinformationen der Teilscheibe gemäß den Anforderungsbeschreibungsinformationen der Netzwerkscheibe;
eine Einheit einer Netzwerkscheiben-Teilnetz-Verwaltungsfunktion, NSSMF, bestimmt einen Verteilungsindikator eines entsprechenden Netzwerkdienstes gemäß den Anforderungsbeschreibungsinformationen der Teilscheibe, verteilt die Teilscheibe basierend auf dem Verteilungsindikator des Netzwerkdiensts, und Verwalten der Teilscheibe durch Interagieren mit anderen Netzwerkelementeinrichtungen;
Hinzufügen einer Einheit einer Netzwerkscheiben-Auswahlfunktion, NSSF, in der Netzwerkscheibe, wobei die NSSF-Einheit konfiguriert ist, um eine Bedingung, die eine Änderung der Betriebsinformationen der Netzwerkscheibe auslöst, und die letzten Betriebsinformationen der Netzwerkscheibe zu erlangen.

## Revendications

1. Procédé de gestion de tranche de réseau, lequel est **caractérisé par** les étapes ci-dessous consistant à :
recevoir (S101), par le biais d'une unité de fonction de gestion de service de communication, CSMF, des informations d'abonnement de service de communication initiées par un utilisateur par l'intermédiaire d'un dispositif client ;
convertir (S102), par le biais d'une unité de fonction de gestion de tranche de réseau, NSMF, les informations d'abonnement de service de communication en informations de description d'exigences d'une tranche de réseau ;
diviser, par le biais de l'unité de fonction NSMF, la tranche de réseau en différentes sous-tranches ;
sélectionner (S103) une sous-tranche parmi les différentes sous-tranches et déterminer des informations de description d'exigences de la sous-tranche, selon les informations de description d'exigences de la tranche de réseau ;
déterminer, par le biais d'une unité de fonction de gestion de sous-réseau de tranche de réseau, NSSMF, un indicateur de déploiement d'un service de réseau correspondant selon les informations de description d'exigences de la sous-tranche, déployer la sous-tranche sur la base de l'indicateur de déploiement du service de réseau, et gérer (S105) la sous-tranche en interagissant avec d'autres installations d'éléments de réseau ;et
ajouter une unité de fonction de sélection de tranche de réseau, NSSF, dans la tranche de réseau, dans laquelle l'unité de fonction NSSF est configurée de manière à obtenir une condition qui déclenche un changement d'informations de fonctionnement de la tranche de réseau et les dernières informations de fonctionnement de la tranche de réseau.

2. Procédé de gestion de tranche de réseau selon la revendication 1, dans lequel l'indicateur de déploiement du service de réseau comprend au moins l'un des éléments parmi une capacité, un modèle de trafic, des caractéristiques de tolérance aux sinistres, un partage, une accélération et une priorité.

3. Procédé de gestion de tranche de réseau selon la revendication 1, dans lequel les informations de description d'exigences comprennent des informations d'accord de niveau de service, SLA ; et
dans lequel l'étape dans laquelle l'unité de fonction NSSMF détermine l'indicateur de déploiement du service de réseau correspondant selon les informations de description d'exigences de la sous-tranche, et déploie la sous-tranche sur la base de l'indicateur de déploiement du service de réseau, comprend les étapes ci-dessous consistant à :
sélectionner, par le biais de l'unité de fonction NSSMF, un service de réseau prédéfini, ou générer un nouveau service de réseau sur la base du service de réseau prédéfini, selon des informations d'accord SLA de la sous-tranche ;
déterminer, par le biais de l'unité de fonction NSSMF, un indicateur de déploiement du service de réseau sélectionné ou généré ;
initier, par le biais de l'unité de fonction NSSMF, une demande de réservation d'une ressource pour la sous-tranche, auprès d'un orchestrateur de virtualisation de fonction de réseau, NFVO, sur la base de l'indicateur de déploiement du service de réseau sélectionné ou généré ;
recevoir, par le biais de l'unité de fonction NSSMF, un message de réponse renvoyé par l'orchestrateur NFVO pour indiquer que la ressource pour la sous-tranche a été correctement réservée ; et
initier, par le biais de l'unité de fonction NSSMF, une demande de déploiement de la sous-tranche, auprès de l'orchestrateur NFVO.

4. Procédé de gestion de tranche de réseau selon la revendication 1, dans lequel l'étape dans laquelle l'unité de fonction NSSMF gère la sous-tranche en interagissant avec les autres installations d'éléments de réseau comprend l'étape ci-dessous consistant à :
envoyer, par le biais de l'unité de fonction NSSMF, un message de réponse indiquant le déploiement réussi de la sous-tranche à l'unité de fonction NSMF, dans lequel le message de réponse indiquant le déploiement réussi de la sous-tranche transporte des informations d'instanciation de la sous-tranche et des informations d'éléments de réseau / composants de service composant la sous-tranche.

5. Procédé de gestion de tranche de réseau selon l'une quelconque des revendications 1 à 4, dans lequel l'étape dans laquelle l'unité de fonction NSSMF gère la sous-tranche en interagissant avec les autres installations d'éléments de réseau comprend les étapes ci-dessous dans lesquelles :
un module de gestion d'élément, EM, poussent des données de configuration vers des fonctions de réseau virtuelles, VNF, ou des composants de service dans la sous-tranche ; ou
des fonctions VNF ou des composants de service dans la sous-tranche acquièrent des données de configuration auprès d'un module EM.

6. Procédé de gestion de tranche de réseau selon la revendication 1, lequel est en outre **caractérisé par** les étapes ci-dessous consistant à :
recevoir, par le biais de l'unité de fonction NSMF ou de l'unité de fonction NSSMF, une demande d'abonnement pour une notification de changement des informations de fonctionnement de la tranche de réseau en provenance de l'unité de fonction NSSF ; et
envoyer, par le biais de l'unité de fonction NSMF ou de l'unité de fonction NSSMF, une notification de changement des informations de fonctionnement de la tranche de réseau à l'unité de fonction NSSF lorsque les informations de fonctionnement de la tranche de réseau changent.

7. Procédé de gestion de tranche de réseau selon la revendication 6, dans lequel la notification de changement comprend un type de changement, et le type de changement comprend au moins l'un parmi un ajout, une modification et une suppression de la tranche de réseau.

8. Système de gestion de tranche de réseau, lequel est **caractérisé par** :
une unité de fonction de gestion de service de communication, CSMF, configurée de manière à recevoir des informations d'abonnement de service de communication initiées par un utilisateur par l'intermédiaire d'un dispositif client ;
une unité de fonction de gestion de tranche de réseau, NSMF, configurée de manière à convertir les informations d'abonnement de service de communication en informations de description d'exigences d'une tranche de réseau, à diviser la tranche de réseau en différentes sous-tranches, à sélectionner une sous-tranche parmi les différentes sous-tranches et à déterminer des informations de description d'exigences de la sous-tranche, selon les informations de description d'exigences de la tranche de réseau ;
une unité de fonction de gestion de sous-réseau de tranche de réseau, NSSMF, configurée de manière à déterminer un indicateur de déploiement d'un service de réseau correspondant selon les informations de description d'exigences de la sous-tranche, à déployer la sous-tranche sur la base de l'indicateur de déploiement du service de réseau et à gérer la sous-tranche en interagissant avec d'autres installations d'éléments de réseau ; et
une unité de fonction de sélection de tranche de réseau, NSSF, ajoutée à la tranche de réseau, dans laquelle l'unité de fonction NSSF est configurée de manière à obtenir une condition qui déclenche un changement d'informations de fonctionnement de la tranche de réseau et les dernières informations de fonctionnement de la tranche de réseau.

9. Système de gestion de tranche de réseau selon la revendication 8, dans lequel les informations de description d'exigences comprennent des informations d'accord de niveau de service, SLA ; et
dans lequel l'unité de fonction NSSMF est en outre configurée de manière à :
sélectionner un service de réseau prédéfini, ou générer un nouveau service de réseau sur la base du service de réseau prédéfini, selon des informations d'accord SLA de la sous-tranche ;
déterminer un indicateur de déploiement du service de réseau sélectionné ou généré ;
initier une demande de réservation d'une ressource pour la sous-tranche, auprès d'un orchestrateur de virtualisation de fonction de réseau, NFVO, sur la base de l'indicateur de déploiement du service de réseau sélectionné ou généré ;
recevoir un message de réponse renvoyé par l'orchestrateur NFVO pour indiquer que la ressource pour la sous-tranche a été correctement réservée ; et
initier une demande de déploiement de la sous-tranche, auprès de l'orchestrateur NFVO.

10. Système de gestion de tranche de réseau selon la revendication 8, dans lequel l'unité de fonction NSSMF est en outre configurée de manière à :
envoyer un message de réponse indiquant le déploiement réussi de la sous-tranche à l'unité de fonction NSMF, dans lequel le message de réponse indiquant le déploiement réussi de la sous-tranche transporte des informations d'instanciation de la sous-tranche et des informations d'éléments de réseau / composants de service composant la sous-tranche.

11. Système de gestion de tranche de réseau selon l'une quelconque des revendications 8 à 10, **caractérisé en outre par** :
un module de gestion d'élément, EM, configuré de manière à pousser des données de configuration vers des fonctions de réseau virtuelles, VNF, ou des composants de service dans la sous-tranche ; ou
des fonctions VNF ou des composants de service dans la sous-tranche configurées de manière à acquérir des données de configuration auprès d'un module EM.

12. Système de gestion de tranche de réseau selon la revendication 8, dans lequel l'unité de fonction NSMF ou l'unité de fonction NSSMF est configurée de manière à :
recevoir une demande d'abonnement pour une notification de changement des informations de fonctionnement de la tranche de réseau, en provenance de l'unité de fonction NSSF ; et
envoyer une notification de changement des informations de fonctionnement de la tranche de réseau à l'unité de fonction NSSF lorsque les informations de fonctionnement de la tranche de réseau changent.

13. Support de stockage lisible par ordinateur sur lequel sont stockés un ou plusieurs programmes informatiques qui, lorsqu'ils sont exécutés par un ou plusieurs processeurs, entraînent la mise en oeuvre des étapes ci-dessous dans lesquelles :
une unité de fonction de gestion de service de communication, CSMF, reçoit des informations d'abonnement de service de communication initiées par un utilisateur par l'intermédiaire d'un dispositif client ;
une unité de fonction de gestion de tranche de réseau, NSMF, convertit les informations d'abonnement de service de communication en informations de description d'exigences d'une tranche de réseau, divise la tranche de réseau en différentes sous-tranches, sélectionne une sous-tranche parmi les différentes sous-tranches et détermine des informations de description d'exigences de la sous-tranche, selon les informations de description d'exigences de la tranche de réseau ;
une unité de fonction de gestion de sous-réseau de tranche de réseau, NSSMF, détermine un indicateur de déploiement d'un service de réseau correspondant selon les informations de description d'exigences de la sous-tranche, déploie la sous-tranche sur la base de l'indicateur de déploiement du service de réseau et gère la sous-tranche en interagissant avec d'autres installations d'éléments de réseau ; et
une unité de fonction de sélection de tranche de réseau, NSSF, est ajoutée à la tranche de réseau, dans laquelle l'unité de fonction NSSF est configurée de manière à obtenir une condition qui déclenche un changement d'informations de fonctionnement de la tranche de réseau et les dernières informations de fonctionnement de la tranche de réseau.
